# EUROPÄISCHE PATENTSCHRIFT

(11) **EP 3 808 530 B1**
(45) Veröffentlichungstag und Bekanntmachung des Hinweises auf die Patenterteilung: **02.08.2023**
(21) Anmeldenummer: 20200193.9
(22) Anmeldetag: 06.10.2020
(51) Int. Cl.: B29C 45/17, B29C 45/76, B65B 57/14, B65B 1/06, B07C 5/36, B65B 5/10

(54) **VERFAHREN UND ANORDNUNG ZUM ABFÜLLEN VON KUNSTSTOFFTEILEN**
METHOD AND ASSEMBLY FOR FILLING PLASTIC PARTS
PROCÉDÉ ET AGENCEMENT DE REMPLISSAGE DES PIÈCES EN MATIÈRE PLASTIQUE

(30) Priorität: 15.10.2019 DE 102019127664
(43) Veröffentlichungstag der Anmeldung: 21.04.2021
(73) Patentinhaber: INTRAVIS Gesellschaft für Lieferungen und Leistungen von bildgebenden und bildverarbeitenden Anlagen und Verfahren mbH, 52068 Aachen (DE)
(72) Erfinder: Fuhrmann, Gerd, 52066 Aachen (DE); Schreck, Christian, 52249 Eschweiler (DE)
(74) Vertreter: Kohlmann, Kai

(56) Entgegenhaltungen:
- EP-A1- 1 479 454
- WO-A2-2008/037093
- DE-A1-102016 004 772
- DE-A1-102016 006 149
- DE-B3-102009 011 269
- DE-B3-102017 123 888

## Beschreibung

Die Erfindung betrifft ein Verfahren zum nacheinander erfolgenden Abfüllen von zyklisch mit einer Kunststoff-Verarbeitungsmaschine hergestellten Kunststoffteilen in mehrere Behälter mit einer Abfülleinheit, wobei in jeden Behälter eine vorzugsweise übereinstimmende Menge mehrerer Kunststoffteile abgefüllt wird. Außerdem betrifft die Erfindung eine Anordnung zur Durchführung des Verfahrens.

Insbesondere betrifft die Erfindung ein Verfahren und eine Anordnung zum nacheinander erfolgenden Abfüllen von zyklisch mit einer Spritzgießmaschine hergestellten Spritzgussteilen. Bei der Herstellung von Spritzgussteilen, wie beispielsweise Vorformlingen (Preforms) und Kappen für Kunststoffverpackungen, werden eine Vielzahl von Teilen in den Kavitäten der Form der Spritzgießmaschine zyklisch parallel ausgespritzt und anschließend gemeinsam ausgeworfen. Das gemeinsame Herstellen und Auswerfen wird auch als Schuss bezeichnet. Mit jedem Schuss generiert die Spritzgießmaschine ein Signal, dass sogenannte Schusssignal.

Außerdem betrifft die Erfindung ein Verfahren zum nacheinander erfolgenden Abfüllen von zyklisch mit einer Maschine zum Formpressen hergestellten Kunststoffteilen. Neben den erwähnten Spritzgießmaschinen kommen zur Herstellung einfacher Kunststoffteile, wie beispielsweise Kappen für Kunststoffverpackungen, Maschinen zum Formpressen zum Einsatz.

Unter Formpressen versteht man ein der Herstellung von Kunststoffteilen dienendes, zyklisches Verfahren. Beim Formpressen wird Formmasse in die Kavität(en) eingebracht und mittels erhöhter Temperatur verflüssigt. Das Formwerkzeug wird anschließend mithilfe eines Druckkolbens geschlossen und dadurch die Formmasse in die durch die Kavität(en) vorgegebene Form gebracht. Nach dem Pressen und Abkühlen wird das Formwerkzeug geöffnet und jedes hergestellte Kunststoffteil ausgeworfen. Anstelle eines Schusssignals generiert die Maschine zum Formpressen ein Taktsignal beim Auswerfen der hergestellten Kunststoffteile.

In der nachfolgenden Darstellung des Standes der Technik, der Beschreibung der Erfindung sowie der Erläuterung der Ausführungsbeispiele wird der Einfachheit halber ausschließlich auf die verbreitete Herstellung von Spritzgussteilen aus Kunststoff mit einer Spritzgießmaschine Bezug genommen. Gleichwohl gelten die Beschreibung der Erfindung sowie die Erläuterung der Ausführungsbeispiele in gleicher Weise für eine zyklische Herstellung von Kunststoffteilen im Wege des Formpressens. Sowohl das Schusssignal beim Spritzgießen als auch das Taktsignal beim Formpressen sind Signale, die je Herstellungszyklus von der Kunststoff-Verarbeitungsmaschine generiert werden. Soweit daher nachfolgend im Zusammenhang mit dem Spritzgießen auf das Schusssignal Bezug genommen wird, gelten die Ausführungen in gleicher Weise für das korrespondierende Taktsignal einer Maschine zum Formpressen.

Die von der Spritzgießmaschine ausgeworfenen Spritzgussteile werden mit einer Transporteinrichtung zu einer Abfülleinheit insbesondere ungeordnet transportiert, die die Spritzgussteile in übereinstimmende Behälter, beispielsweise sogenannte Oktabins, abfüllt. Vorzugsweise werden sämtliche Behälter mit einer übereinstimmenden Menge an Spritzgussteilen befüllt. Die Abfülleinheit befüllt nach Erreichen einer bestimmten Menge in einem Behälter automatisch jeweils den nächsten Behälter und gewährleistet dadurch eine unterbrechungsfreie Abfüllung der in einen kontinuierlichen Strom mittels der Transporteinrichtung zugeführten Spritzgussteile. Während des insbesondere ungeordneten Transports zu der Abfülleinheit können die Spritzgussteile zudem weiter abkühlen.

Um das nacheinander erfolgende Abfüllen übereinstimmender Mengen an Spritzgussteilen in die mehreren Behälter zu gewährleisten sind im Stand der Technik unterschiedliche Verfahren bekannt:
1. Das Schusssignal der Spritzgießmaschine wird zyklisch an eine Steuerung der Abfülleinheit übertragen. Hat die Form der Spritzgießmaschine beispielsweise 96 Kavitäten, ist der Abfülleinheit bekannt, dass mit jedem Schusssignal 96 Spritzgussteile hergestellt wurden. Auf der Basis dieses Schusssignals ermittelt die Steuerung der Abfülleinheit die abgefüllte Anzahl an Spritzgussteilen und wechselt automatisch auf den nächsten Behälter, wenn eine bestimmte Anzahl an Spritzgussteilen abgefüllt wurde.
2. Darüber hinaus ist es bekannt, dass die abgefüllte Menge an Spritzgussteilen am Ort der Abfüllung erfasst wird, beispielsweise durch Wiegen des Behälters. Das Signal der Waage wird von der Steuerung der Abfülleinheit ausgewertet. Bei Erreichen eines Sollwertes für das Gewicht des Behälters wechselt die Abfülleinheit automatisch auf den nächsten Behälter.

Spritzgussteile mit einer nicht einwandfreien Beschaffenheit in einem oder mehreren Merkmalen, wie beispielsweise Formfehlern oder Farbfehlern, gelangen bei dem bekannten Abfüllverfahren ungehindert in die Behälter. Fehlerhaft hergestellte Spritzgussteile können zeitweilig gehäuft auftreten. Ursache für eine derartige Häufung können zeitweilige Veränderungen der Bedingungen beim Spitzgießen sein, die sich auf einzelne oder mehrere Kavitäten der Spritzgießmaschine und/oder das verarbeitete Rohmaterial auswirken. Zeitweilige Veränderungen treten insbesondre auch beim Anfahren des Herstellungsprozesses auf. Das kann dazu führen, dass einzelne oder mehrere der nacheinander befüllten Behälter einen Anteil an fehlerhaften Spritzgussteilen enthalten, der über einem festgelegten Grenzwert, beispielsweise für eine tolerable Fehlerquote, liegt.

Die einzelnen oder mehreren Behälter mit einem unzulässig hohen Anteil an fehlerhaften Spritzgussteilen lassen sich nach dem Abfüllen der Gesamtmenge der abzufüllenden Spritzgussteile in mehrere Behälter nicht ohne Weiteres identifizieren. Dies kann zur Folge haben, dass eine in mehrere Behälter abgefüllte Gesamtmenge wegen Nichteinhaltung der geforderten Qualität nicht ausgeliefert werden kann.

Zur Vermeidung dieses Problems wird im Stand der Technik die Spritzgießmaschine vielfach mit reduzierter Leistung und/oder einem Überschuss an Extrudat betrieben, um die Fehlerquote zu senken, was jedoch Produktivitätsnachteile zur Folge hat. Insbesondere auch in der Anfahrphase des Spritzgießprozesses werden in Unkenntnis des Umfangs der dabei vermehrt auftretenden Fehler vorsorglich zu viele der hergestellten Spritzgussteile ausgesondert, um die geforderte Qualität der Gesamtmenge sicherzustellen.

Ferner ist es zur Qualitätssicherung bekannt, die in die Behälter bereits abgefüllten Spritzgussteile anschließend stichprobenartig oder sogar vollständig auf die Einhaltung der geforderten Qualität zu prüfen.

Die DE 602 06 576 T2 offenbart ein gattungsfremdes Verfahren für das Überführen von Kontaktlinsen zwischen mehreren Bearbeitungsstationen eines Kontaktlinsen-Herstellungssystem sowie das automatisierte Überführen von einzelnen Kontaktlinsen in individuelle Packungen. Mehrere jeweils in Formen ausgebildete Kontaktlinsen werden mit Hilfe von Paletten geordnet durch das Kontaktlinsen-Herstellungssystem befördert. Die Paletten gelangen zunächst in eine Linsenprüfstation. Die Linsenprüfungsstation prüft die Kontaktlinsen auf Mängel und generiert einen elektronischen Datensatz, der der Palette zugeordnet ist. Der Datensatz schließt die Prüfergebnisdaten ein, die das Muster von angenommenen und zurückgewiesenen Kontaktlinsen innerhalb der Palette repräsentieren. Der zugeordnete Datensatz dient dem Zweck, die Kontaktlinsen auf ihrem Weg durch das Kontaktlinsen-Herstellungssystem zu verfolgen. In einer der Linsensprüfungsstation nachfolgenden Linsenentfernungsstation werden diejenigen Linsen entfernt, bei denen festgestellt wurde, dass sie das Linsenprüfungsverfahren nicht bestanden haben. Das Ziel der Nachverfolgung der einzelnen Linsen mit Hilfe des elektronischen Datensatzes auf ihrem Weg durch das Herstellungssystem besteht darin, dass nur solche Linsen, die die Prüfung bestanden haben, einer Hydration und einer anschließenden einzelnen Verpackung jeder Kontaktlinse zugeführt werden.

Eine Spritzgießsystem nach der DE 10 2016 004 772 umfasst einen Roboter, der, sofern eine Kontrollvorrichtung zur visuellen Kontrolle der hergestellten Formteile vorhanden ist, die Formteile entweder in einen Behälter D für konforme Produkte oder in einen Behälter E für fehlerhafte Formteile ablegt.

Die EP 1 479 454 A1 offenbart eine Vorrichtung, die nach optischer Prüfung fehlerhafte Teile einem ersten Behälter und die einwandfreien Teile einem zweiten Behälter zuführt.

DE 10 2017 123888 B3 offenbart ein Verfahren, bei dem eine Datenverarbeitungseinheit über eine Steuerung einen Befehl an eine Aussonderungseinrichtung ausgibt, um einen bei einer Prüfung als defekt erkannten Preform in einen Behälter auszusondern, während die einwandfreien Preforms einer Behälter-Endfertigung zugeführt werden.

Die DE 10 2009 011269 B3 betrifft schließlich ein Verfahren und eine Vorrichtung zur Aussonderung von Rückstellmustern aus einem Herstellungsprozess von übereinstimmenden Formteilen.

Ausgehend von diesem Stand der Technik liegt der Erfindung die Aufgabe zugrunde, ein Verfahren zum nacheinander erfolgenden Abfüllen einer Gesamtmenge von zyklisch mit einer Spritzgießmaschine hergestellten Spritzgussteilen in mehrere Behälter zu schaffen, wobei in jeden Behälter mehrere Spritzgussteile abgefüllt werden, bei dem trotz hoher Auslastung der Spritzgießmaschine bei zugleich weniger vorsorglich ausgesonderten Spritzgussteilen die geforderte Qualität der abzufüllenden Spritzgussteile sichergestellt wird.

Die Lösung basiert auf dem Gedanken, eine zeitweilige Fehlerhäufung, d.h. eine zu hohe Fehlerquote in einzelnen oder mehreren der abgefüllten Behältern frühzeitig zu erkennen, insbesondere ohne dass nach dem Abfüllen eine gesonderte Prüfung der abgefüllten Spritzgussteile erforderlich ist. Die Behälter mit zu hoher Fehlerquote werden gezielt ausgesondert, um einen festgelegten Grenzwert für die Fehlerquote der Gesamtmenge der abzufüllenden Spritzgussteile nicht zu überschreiten.

Im Einzelnen wird die Aufgabe durch Verfahren mit den Merkmalen der unabhängigen Ansprüche 1 und 2 gelöst.

Die hergestellten und aus der Spritzgießmaschine ausgeworfenen Spritzgussteile werden während des Transports zu der Abfülleinheit zumindest teilweise mittels eines vorzugsweise optischen Prüfsystem auf mindestens ein Merkmal geprüft, wobei jeder der mehreren Behälter über ein eindeutiges Identifikationsmerkmal vor dem Abfüllen identifiziert wird, das eindeutige Identifikationsmerkmal an das Prüfsystem übertragen und die Merkmale der abgefüllten Spritzgussteile dem identifizierten Behälter zugeordnet werden.

Die Identifizierung jedes Behälters vor dem Abfüllen mittels des eindeutigen Identifikationsmerkmals ermöglicht die Zuordnung der bei der Prüfung mit dem Prüfsystem festgestellten Merkmale der abgefüllten Teile zu dem jeweiligen Behälter.

Die automatische Identifikation von Objekten mittels Identifikationsmerkmalen, auch als Identifikatoren bezeichnet, ist an sich bekannt. Als Identifikationsmerkmale können grundsätzlich ohnehin vorhandene Merkmale der Behälter, einschließlich deren Position, herangezogen werden, sofern sie in ihrer Kombination eindeutig sind. Da die üblichen Oktabins, in die die Spritzgussteile abgefüllt werden, sämtlich übereinstimmen, wird bei dem erfindungsgemäßen Verfahren an jedem Behälter ein eindeutiger, maschinenlesbarer Code als Identifikator vor dem Abfüllen angebracht. Bei dem Code kann es sich beispielsweise um einen Barcode, einen Klartextaufdruck, ein Smart-Label oder einen RFID-Tag handeln, der vorzugsweise berührungslos mittels einer Leseeinrichtung automatisch ausgelesen wird. Die Behälter können jedoch auch bereits mit dem eindeutig identifizierenden Merkmal hergestellt und der Abfüllstation zugeführt werden. Das Identifikationsmerkmal des abzufüllenden Behälters wird mittels der im Abfüllbereich angeordneten Leseeinrichtung automatisch ausgelesen und für die Zuordnung der geprüften Merkmale zu dem Behälter an das Prüfsystem übertragen. Aufgrund der Zuordnung kann das Prüfsystem ermitteln, welche Merkmale die in den identifizierten Behälter abgefüllten Spritzgussteile aufweisen. Diese Information des Prüfsystems erlaubt die gezielte Aussonderung von Behältern mit zu hoher Fehlerquote.

Im Hinblick auf die erwähnte zeitweilige Häufung von fehlerhaft hergestellten Spritzgussteilen ist es erfindungsgemäß nicht erforderlich, sämtliche Spritzgussteile während des Transports zu der Abfülleinheit zu prüfen. Es ist ausreichend eine statistisch relevante Anzahl der Spritzgussteile mit dem Prüfsystem zu prüfen. Die lediglich teilweise Prüfung der Spritzgussteile erlaubt es, auf eine Vereinzelung und vollständige Ausrichtung der Spritzgussteile vor der Prüfung zu verzichten, die mit einem hohen apparativen Aufwand verbunden ist. Die Spritzgussteile können bei einer teilweisen Prüfung der Spritzgussteile auf einem Bandförderer von der Spritzgießmaschine zur Abfülleinheit ungeordnet transportiert und dabei beispielsweise auf ihre Farbbeschaffenheit geprüft werden. Ein Bandförderer ist üblicherweise zum Abtransport der ausgeworfenen Spritzgussteile ohnehin in der Produktionsumgebung der Spritzgießmaschine vorgesehen.

Soweit Spritzgussteile aufgrund ihrer Lage auf dem Band nicht geprüft werden können ist dies unschädlich, soweit eine statistisch für die Gesamtheit der zu prüfenden Spritzgussteile ausreichende Anzahl an Spritzgussteilen geprüft werden kann. Der ungeordnete Bandtransport ist daher unschädlich.

Sollen neben der Farbbeschaffenheit beispielweise auch Formmerkmale von dem Prüfsystem erkannt werden, kann der Bandförderer derart konfiguriert sein, dass er die Spritzgussteile zumindest teilweise ausrichtet. Für hohlzylindrische Vorformlinge ist beispielsweise ein Riemenbandförderer zur Ausrichtung geeignet, sofern der Riemenabstand auf den Durchmesser der Vorformlinge abgestimmt und durch Einleiten von Drehimpulsen in die auf den Riemenbandförderer aufgegebenen Vorformlinge deren Orientierung parallel zu den Riemen des Riemenbandförderers bewirkt wird.

Um stets jeweils eine nahezu übereinstimmende Anzahl an Spritzgussteilen nacheinander in die eindeutig identifizierten Behälter abzufüllen und die Merkmale der abgefüllten Spritzgussteile dem identifizierten Behälter zuzuordnen, umfasst das erfindungsgemäße Verfahren nach Anspruch 2 folgende weiteren Schritte:
- Ermitteln der Anzahl der zyklisch hergestellten Spritzgussteile,
- Ermitteln der Dauer zwischen dem Prüfen und dem Abfüllen der Spritzgussteile,
- Zuordnen der Merkmale der abgefüllten Spritzgussteile zu dem identifizierten Behälter unter Berücksichtigung der Dauer zwischen dem Prüfen und dem Abfüllen der Spritzgussteile,
- Ermitteln der Dauer zwischen dem Auswerfen und dem Abfüllen der Spritzgussteile und
- Abfüllen einer vorgegebenen Anzahl der Spritzgussteile in den identifizierten Behälter unter Berücksichtigung der Anzahl der zyklisch hergestellten Spritzgussteile sowie der Dauer zwischen dem Auswerfen und dem Abfüllen der Spritzgussteile.

Das Prüfsystem ermittelt die Anzahl der zyklisch, d.h. je Zeiteinheit, hergestellten Spritzgussteile vorzugsweise aus einem je Herstellungszyklus von der Spritzgießmaschine generierten Schusssignal, weil dieses von der Spritzgießmaschine ohne zusätzlichen Aufwand abgegriffen werden kann und mit der Anzahl der je Schuss ausgeworfenen Spritzgussteile korrespondiert. Bei der Ermittlung der Anzahl können in dem Prüfsystem Korrekturfaktoren berücksichtigt werden, wenn beispielsweise einzelne Kavitäten der Form defekt sind und sich infolgedessen die je Schuss ausgeworfene Anzahl an Spritzgussteilen reduziert.

Um die Prüfergebnisse der Spritzgussteile dem eindeutig identifizierten Behälter zuordnen zu können, muss dem Prüfsystem die Dauer zwischen Prüfung und Abfüllung bekannt sein. Diese Dauer hängt von der Transportgeschwindigkeit der geprüften Spritzgussteile ab. Bei konstanter Transportgeschwindigkeit kann die Dauer aus der Transportstrecke zwischen Prüfung und Abfüllung sowie der konstanten Geschwindigkeit ermittelt werden. Sofern die Transportgeschwindigkeit der Transportvorrichtung, beispielsweise eines Bandförderers, variiert, kann die Dauer mit Hilfe eines Drehwinkelgebers an einer der Umlenkrollen des Förderbandes ermittelt werden.

Um eine vorgegebene Anzahl an Spritzgussteilen in den identifizierten Behälter abzufüllen, muss dem Prüfsystem außerdem die Dauer zwischen dem Auswerfen der zyklisch hergestellten Spritzgussteile bis zum Abfüllen der Spritzgussteile bekannt sein, wenn das Prüfsystem die Anzahl der zyklisch hergestellten Spritzgussteile aus dem Schusssignal ermittelt. Diese Dauer hängt von der Transportgeschwindigkeit der Spritzgussteile ab. Bei konstanter Transportgeschwindigkeit kann die Dauer aus der Transportstrecke zwischen Abwurf und Abfüllung sowie der konstanten Geschwindigkeit ermittelt werden. Sofern die Transportgeschwindigkeit der Transportvorrichtung, beispielsweise eines Bandförderers, variiert, kann die Dauer mit Hilfe eines Drehwinkelgebers an einer der Umlenkrollen des Förderbandes ermittelt werden. Der Vollständigkeit halber sei darauf hingewiesen, dass die Transportvorrichtung mehrere, hintereinander angeordnete Stetigförderer aufweisen kann.

Werden von dem Prüfsystem sämtliche zyklisch hergestellten Spritzgussteile vollständig geprüft, kann das Prüfsystem die Anzahl der zyklisch hergestellten Spritzgussteile gemäß den Merkmalen des Anspruchs 1 ohne das Schusssignal ausschließlich aus den aufgezeichneten Prüfdaten ermitteln. In diesem Fall genügt es, wenn dem Prüfsystem die Dauer zwischen dem Prüfen der zyklisch hergestellten Spritzgussteile bis zum Abfüllen der Spritzgussteile bekannt ist, um eine vorgegebene Anzahl an Spritzgussteilen in den identifizierten Behälter abzufüllen.

Sofern in einer bevorzugten Ausführungsform der Erfindung lediglich eine statistisch relevante Anzahl der Spritzgussteile mit dem Prüfsystem geprüft wird, umfasst das Verfahren die folgenden weiteren Schritte:
- Ermittlung des Anteils der geprüften Spritzgussteile an der hergestellten Menge der Spritzgussteile unter Berücksichtigung der prüfbaren Spritzgussteile, der Anzahl der zyklisch hergestellten Spritzgussteile sowie der Dauer zwischen dem Auswerfen der zyklisch hergestellten Spritzgussteile und dem Prüfen der Spritzgussteile und
- statistische Ermittlung der Merkmale der zyklisch hergestellten Spritzgussteile auf der Basis der Merkmale des Anteils der geprüften Spritzgussteile.

Prüfbare Spritzgussteile sind solche, bei denen das Prüfsystem aufgrund ihrer Lage und Orientierung in dem jeweils aufgenommenen Bild das zu untersuchende Merkmal auswerten kann. In dem das Prüfsystem fortlaufend die Anzahl der prüfbaren Spritzgussteile in ein Verhältnis zu der Anzahl der zyklisch hergestellten Spritzgussteile unter Berücksichtigung der Dauer zwischen dem Auswerfen der zyklisch hergestellten Spritzgussteile und dem Prüfen setzt, ist dem Prüfsystem der Anteil der geprüften Spritzgussteile an der Gesamtheit der zyklisch hergestellten Spritzgussteile bekannt.

Auf der Basis der bekannten Merkmale des geprüften Anteils der Spritzgussanteile kann das Prüfsystem die Merkmale der Gesamtheit der hergestellten Spritzgussteile mittels statistischer Methoden ermitteln.

Um die Fehlerquote der abgefüllten Spritzgussteile in den Behältern zu reduzieren, ist in einer vorteilhaften Ausgestaltung des erfindungsgemäßen Verfahrens vorgesehen, bei der Prüfung als fehlerhaft erkannte Spritzgussteile automatisiert vor dem Abfüllen auszusondern und die vorgegebene Anzahl der Spritzgussteile in den identifizierten Behälter unter Berücksichtigung der Anzahl der zyklisch hegestellten Spritzgussteile, bereinigt um die ausgesonderten Spritzgussteile, abzufüllen.

Enthält der prüfbare Anteil der Spritzgussteile, beispielsweise 70% der in einem Zeitraum eines Schusses hergestellten 100 Spritzgussteile, 7 fehlerhafte Spritzgussteile, lässt sich statistisch auf 10 fehlerhafte Spritzgussteile je Schuss schließen. Dies entspricht einer Gesamtfehlerquote von 10%. Durch Ausschleusung der identifizierten 7 fehlerhaften Spritzgussteile lässt sich die Anzahl an fehlerhaften Spritzgussteilen von statisch 10 fehlerhaften Spritzgussteilen auf 3 fehlerhafte Spritzgussteile je Schuss reduzieren. Dies entspricht einer Fehlerquote der abzufüllenden Spritzgussteile von nur noch 3%. Diese Fehlerquote kann unter Umständen bereits innerhalb eines akzeptierten Toleranzbereichs liegen und daher ausgeliefert werden.

Durch die Aussortierung der als fehlerhaft erkannten Spritzgussteile kann daher die Anzahl an Behältern mit akzeptabler Fehlerquote gesteigert werden.

Um im Fall der Aussortierung von fehlerhaften Teilen die abgefüllte gesamte Menge durch die Entnahme von Teilen nicht zu reduzieren, kann das Prüfsystem bei der bevorzugten schussbasierten Ermittlung der Anzahl der zyklisch hergestellten Spritzgussteile das Schusssignal dadurch korrigieren, dass es verzögert an die Steuerung der Abfülleinheit übertragen wird. Die Verzögerung ist erforderlich, damit die aussortierten Spritzgussteile eines Schusses durch im nachfolgenden Schuss hergestellte Spritzgussteile ersetzt werden können, bevor das Schusssignal an die Steuerung übertragen wird. Hierdurch wird sichergestellt, dass jedes Schusssignal eine gleichbleibende Anzahl von Spritzgussteilen repräsentiert.

Das Ergebnis der Prüfung der Spritzgussteile kann beispielsweise über einen Monitor des Prüfsystems ausgegeben werden, beispielsweise als Fehlerquote in Bezug auf ein geprüftes Merkmal je abgefüllten und identifizierten Behälter. In einer Ausgestaltung der Erfindung generiert das Prüfsystem ein Signal, wenn die dem identifizierten Behälter zugeordneten Merkmale außerhalb eines Toleranzbereiches liegen. Das Signal kann einen Behälter mit zu hoher Fehlerquote für die Weiterverarbeitung und/oder Auslieferung sperren oder eine Nachsortierung veranlassen. Des Weiteren kann das Signal dem Maschinenführer auf einer Anzeigeeinheit Hinweise für die Weiterbehandlung der betroffenen Behälter geben.

In weiterer Ausgestaltung der Erfindung kann das optische Prüfsystem abhängig von dem Ergebnis der Prüfung ein Signal für die Spritzgießmaschine bereitstellen, beispielsweise dass der ursprüngliche Herstellungsumfang um weitere zu produzierende Spritzgussteile erhöht werden muss, um den Anteil an ausgesonderten Spritzgussteilen und ggf. von ausgesonderten Behältern auszugleichen.

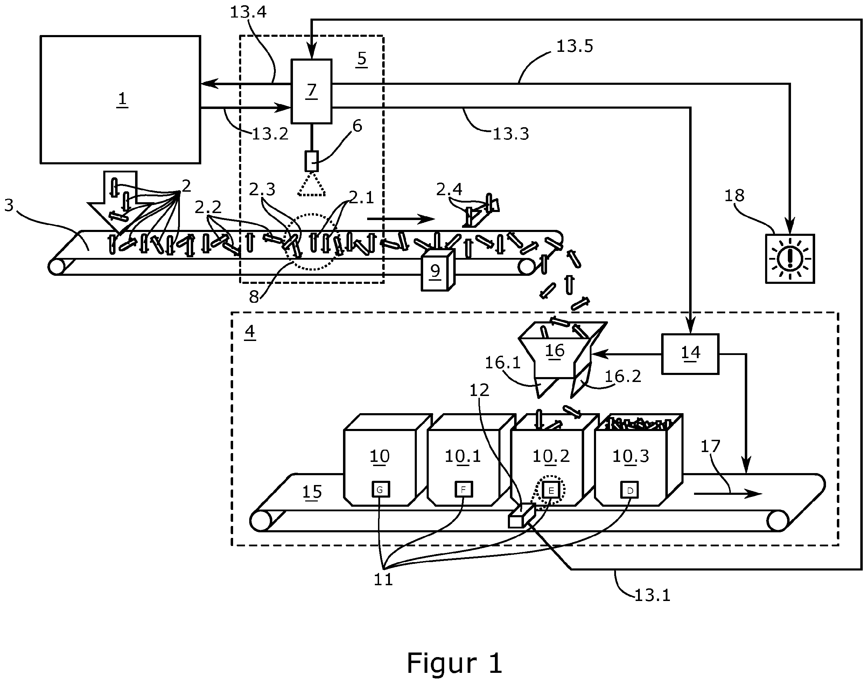

Nachfolgend wird die Erfindung anhand eines in der einzigen Figur 1 dargestellten Schaubildes näher erläutert. Das Schaubild zeigt eine Anordnung zur Durchführung des Verfahrens:
Die Anordnung umfasst eine Spritzgießmaschine 1 zum zyklischen Herstellen und Auswerfen von Spritzgussteilen 2 und eine Abfülleinheit 4, die zum nacheinander erfolgenden Abfüllen der zyklisch mit der Spritzgießmaschine 1 hergestellten Spritzgussteile 2 in mehrere mit einem eindeutigen Identifikationsmerkmal 11 versehene Behälter 10 eingerichtet ist.

Zwischen der Spritzgießmaschine 1 und der Abfülleinheit 4 erstreckt sich eine Transportvorrichtung 3 zum Transportieren der aus der Spritzgießmaschine 1 ausgeworfenen Spritzgussteile 2 zu der Abfülleinheit 4. Die Transportvorrichtung 3 wird in dem dargestellten Ausführungsbeispiel von einem Bandförderer gebildet, der an einem Ende unterhalb der Form der Spritzgießmaschine 1 angeordnet ist, so dass die ausgeworfenen Spritzgussteile 2 durch einen nicht dargestellten Auswurftrichter auf das Band gelangen. An dem gegenüberliegenden Ende des Bandförderers gelangen die Spritzgussteile 2 in die Abfülleinheit 4.

Oberhalb eines ortsfesten Prüfbereichs 8 der Transporteinrichtung 3 ist ein optisches Prüfsystem 5 angeordnet, das als wesentliche Komponenten eine auf den Prüfbereich 8 ausgerichtete Aufnahmeeinrichtung 6 und eine Verarbeitungseinheit 7 aufweist. Bei der Aufnahmeeinrichtung 6 handelt es sich beispielsweise um eine digitale Kamera und bei der Verarbeitungseinheit 7 um einen Personal Computer.

Die Aufnahmeeinrichtung 6 nimmt fortlaufend die den Prüfbereich 8 passierenden Spritzgussteile 2 während des Transports zu der Abfülleinheit 4 auf. Die Verarbeitungseinheit 7 wertet in den aufgenommenen Bildern bestimmte Merkmale der Spritzgussteile 2 aus, beispielsweise bei einem Vorformling die Form der Mündung oder die Farbbeschaffenheit.

Dem Prüfsystem 5 nachgelagert ist eine optionale Aussortiervorrichtung 9, die die geprüften und als fehlerhaft erkannten Spritzgussteile 2.4 aussondert, beispielsweise durch einen quer zur Transportrichtung wirksamen Impuls, der beispielsweise mittels Druckluft erzeugt werden kann.

Die Abfülleinheit 4 umfasst als wesentliche Komponenten ein Transportband 15, das unterhalb eines trichterförmigen Puffers 16 angeordnet ist. Der Puffer 16 weist an seiner Unterseite Klappen 16.1,16.2 auf, die die untere Öffnung des Puffers 16 zeitweilig verschließen. Die Klappen 16.1,16.2 verfügen über einen Antrieb zum Schließen und Öffnen der unteren Öffnung des Puffers 16. Das Transportband 15 kann mittels eines nicht dargestellten Antriebs schrittweise in Bewegungsrichtung 17 bewegt werden, um aufeinanderfolgend die an der Oberseite offenen Behälter 10 in eine Abfüllposition unter die Öffnung des Puffers 16 zu verfahren. Auf den in der Abfüllposition befindlichen Behälter 10.2 ist eine Leseeinrichtung 12 zum automatischen Auslesen des an jedem Behälter 10 angeordneten eindeutigen Identifikationsmerkmals 11 ausgerichtet. Außerdem verfügt die Abfülleinheit 4 über eine Steuerung 14 zum Betätigen der Antriebe für die Klappen 16.1,16.2 des Puffers sowie zum Betätigen des Antriebs des Transportbandes 15. In der Umgebung der Abfülleinheit 4 ist zudem eine Anzeigeeinheit 18 angeordnet, über die Ergebnisse der Prüfung durch das Prüfsystem 5 ausgegeben werden können. Die Signalverarbeitung zwischen den vorgenannten Komponenten der Anordnung zur Durchführung des Verfahrens erfolgt über verschiedene Kommunikationsschnittstellen 13.1,13.2,13.3,13.4.,13.5:

Über die Kommunikationsschnittstelle 13.2 der Spritzgießmaschine 1 wird ein Schusssignal der Spritzgießmaschine 1 an die Verarbeitungseinheit 7 des Prüfsystems 5 übertragen.

Über die Kommunikationsschnittstelle 13.3 der Verarbeitungseinheit 7 wird ein durch die Verarbeitungseinheit 7 korrigiertes Schusssignal an die Steuerung 14 der Abfülleinheit 4 übertragen.

Über die Kommunikationsschnittstelle 13.1 der Leseeinrichtung 12 wird das ausgelesene Identifikationsmerkmal 11 an die Verarbeitungseinheit 7 des Prüfsystems übertragen.

Über die Kommunikationsschnittstelle 13.4 der Verarbeitungseinheit 7 kann ein Steuerungssignal an die Spritzgießmaschine 1 übertragen werden.

Über die Kommunikationsschnittstelle 13.5 der Verarbeitungseinheit 7 kann ein Ausgabesignal an die Anzeigeeinheit 18 übertragen werden.

Die Spritzgießmaschine 1 stellt zyklisch eine Anzahl N übereinstimmende Spritzgussteile 2 her und wirft diese auf die Transportvorrichtung 3 aus. Die Transportvorrichtung 3 transportiert die Spritzgussteile 2 in Richtung der Abfülleinheit 4. Das Prüfsystem 5 prüft während des Transports einen Teil der Spritzgussteile 2.1, die einen statistisch aussagekräftigen Rückschluss auf die Gesamtheit der zyklisch hergestellten Spritzgussteile 2 zulässt. In dem Ausführungsbeispiel sind die aufgrund ihrer Lage quer zur Förderrichtung liegenden Spritzgussteile 2.1 prüfbar, während die Spritzgussteile 2.2 mit davon abweichender Lage sowie die nicht ausreichend vereinzelten Spritzgussteile 2.3 in den aufgenommenen Bildern nicht ausgewertet werden können und daher nicht prüfbar sind.

Die Transportvorrichtung 3 übergibt die Spritzgussteile 2 an die Abfülleinheit 4, die diese aufeinanderfolgend in die auf dem Transportband hintereinander aufgereihten, eindeutig identifizierbaren Behälter 10 abfüllt. Der Behälter 10.3 ist bereits abgefüllt. Der Behälter 10.2 befindet sich in der Abfüllung und der Behälter 10.1 ist leer und wird nach Abfüllung des Behälters 10.2 als nächster befüllt.

Vor der Abfüllung wird über die Leseeinrichtung 12 das Identifikationsmerkmal 11 jedes Behälters 10 vor der Abfüllung gelesen und über die Kommunikationsschnittstelle 13.1 an das Prüfsystem 5 übertragen. Der Verarbeitungseinheit 7 des Prüfsystems 5 ist daher bekannt, welcher Behälter 10.2 aktuell abgefüllt wird.

Ist das Abfüllen abgeschlossen, leitet die Steuerung 14 der Abfülleinheit 4 den Wechsel des Behälters 10 ein. Die Steuerung 14 unterbricht kurzzeitig die Abfüllung, indem die Klappen 16.1, 16.2 des Puffers 16 geschlossen werden. Während der Unterbrechung steuert die Steuerung 14 das Transportband 15 an. Der leere Behälter 10.1 gelangt in die Abfüllposition unter dem Puffer 16 und der vollständig befüllte Behälter 10.2 wird in gleicher Bewegungsrichtung 17 unter dem Puffer 16 wegbewegt und nimmt den Platz des Behälters 10.3 ein.

Ist der Behälterwechsel vollzogen, werden die Klappen 16.1, 16.2 des Puffers 16 wieder geöffnet und die zwischenzeitlich dort angesammelten Spritzgussteile 2 sowie die nachfolgenden Spritzgussteile 2 werden in den nun unter dem Puffer 16 platzierten Behälter 10.1 abgefüllt.

Das zyklische Schusssignal, d.h. die Information über die je Zeiteinheit hergestellten Spritzgussteile 2, wird über die Kommunikationsschnittstelle 13.2 von der Spritzgießmaschine 1 dem Prüfsystem 5 bereitgestellt.

Unter Berücksichtigung der Dauer zwischen Auswurf aus der Spritzgießmaschine 1 und dem Zeitpunkt der Prüfung und der Anzahl der nach dieser Dauer vom Prüfsystem 5 geprüften Spritzgussteile 2.1 kann die Verarbeitungseinheit 7 den Anteil der geprüften Spritzgussteile 2.1 an der Gesamtheit der Spritzgussteile 2 errechnen. Die sich für die prüfbaren Spritzgussteile 2.1 ergebende Fehlerquote kann mittels statistischer Methoden auf die Gesamtheit der den Prüfbereich durchlaufenden Spritzgussteile 2 hochgerechnet werden.

In der dargestellten Ausführungsform steuert die Verarbeitungseinheit 7 des Prüfsystems 5 die Aussortiervorrichtung 9 an, die gezielt die als fehlerhaft erkannten Spritzgussteile 2.4 aussondert.

Da die Verarbeitungseinheit 7 die Entscheidung über eine Aussonderung eines als fehlerhaft erkannten Spritzgußteils 2.4 ermittelt, liegt die Information über die Anzahl der ausgesonderten Spritzgussteile 2.4 und die Information über die Gesamtheit der den Prüfbereich 8 passierenden Spritzgussteile 2 dort vor. Auf der Basis dieser Informationen stellt die Verarbeitungseinheit 7 ein korrigiertes Schusssignal an der Kommunikationsschnittstelle 13.3 bereit, dass die Anzahl der zyklisch hergestellten Spritzgussteile 2 bereinigt um die ausgesonderten Spritzgussteile 2.4 berücksichtigt.

Der Verarbeitungseinheit 7 ist aufgrund des korrigierten Schusssignals die an die Abfülleinheit 4 je Zeiteinheit übergebene Anzahl an Spritzgussteilen (2) sowie deren Fehlerquote bekannt. Das korrigierte Schusssignal wird über die Kommunikationsschnittstelle 13.3 an die Steuerung 14 der Abfülleinheit 4 übertragen. Unter Berücksichtigung des korrigierten Schusssignals und der Dauer zwischen dem Prüfen und dem Abfüllen der Spritzgussteile 2 vollzieht die Steuerung 14 den Behälterwechsel, wenn die für jeden Behälter 2 vorgegebene Menge an abzufüllenden Spritzgussteilen 2 erreicht ist.

Die Identifikationsmerkmale 11 an jedem Behälter 10 und die durch das Prüfen bekannten Merkmale der Spritzgussteile 2, die in den identifizierten Behälter 10 gefüllt wurden, erlauben es dem Prüfsystems 7 den einzelnen, eindeutig identifizierten Behältern 10 Merkmale, beispielsweise eine Fehlerquote zuzuordnen.

Sollte der zum Abtransport vorgesehene, fertig befüllte Behälter 10.3 beispielsweise eine zu hohe Fehlerquote aufweisen, kann die Verarbeitungseinheit 7 des Prüfsystems 5 über die Kommunikationsschnittstelle 13.5 ein Signal zur automatisierten Weiterbehandlung des Behälters 10.3 ausgeben. Wird der Behälter 10.3 manuell abtransportiert, kann über die Kommunikationsschnittstelle 13.5 dem Maschinenbediener ein Hinweis auf die zu hohe Fehlerquote auf einer Anzeigeeinheit 18 ausgegeben werden.

### Bezugszeichenliste

- 1: Spritzgießmaschine / Kunststoff-Verarbeitungsmaschine
- 2: Spritzgussteile / Kunststoffteile
- 2.1: geprüfte Spritzgussteile / Kunststoffteile
- 2.2: nicht geprüfte Spitzgussteile / Kunststoffteile
- 2.3: nicht geprüfte Spitzgussteile /Kunststoffteile
- 2.4: fehlerhafte Spritzgussteile / Kunststoffteile
- 3: Transportvorrichtung
- 4: Abfülleinheit
- 5: Prüfsystem
- 6: Kamera
- 7: Verarbeitungseinheit
- 8: Prüfbereich
- 9: Aussortiervorrichtung
- 10: Behälter
- 10.1: leerer Behälter
- 10.2: abzufüllender Behälter
- 10.3: abgefüllter Behälter
- 11: Identifikationsmerkmal
- 12: Leseeinrichtung
- 13.1: Kommunikationsschnittstelle Leseeinrichtung
- 13.2: Kommunikationsschnittstelle Spritzgießmaschine / Kunststoff-Verarbeitungsmaschine
- 13.3: Kommunikationsschnittstelle Prüfsystem
- 13.4: Kommunikationsschnittstelle Prüfsystem
- 13.5: Kommunikationsschnittstelle Prüfsystem
- 14: Steuerung Abfülleinheit
- 15: Transportband
- 16: Puffer
- 16.1: Klappe
- 16.2: Klappe
- 17: Bewegungsrichtung
- 18: Anzeigeeinheit

## Patentansprüche

1. Verfahren zum nacheinander erfolgenden Abfüllen von zyklisch mit einer Kunststoff-Verarbeitungsmaschine (1) hergestellten Kunststoffteilen (2) in mehrere Behälter (10) mit einer Abfülleinheit (4), wobei in jeden Behälter (10) mehrere Kunststoffteile (2) abgefüllt werden, **dadurch gekennzeichnet, dass** sämtliche hergestellten und aus der Kunststoff-Verarbeitungsmaschine (1) ausgeworfenen Kunststoffteile (2) während des Transports zu der Abfülleinheit (4) mittels eines Prüfsystems (5) auf mindestens ein Merkmal geprüft werden, jeder der mehreren Behälter (10) über ein eindeutiges Identifikationsmerkmal (11) vor dem Abfüllen identifiziert wird, das eindeutige Identifikationsmerkmal (11) an das Prüfsystem (5) übertragen und die Merkmale der abgefüllten Kunststoffteile (2) dem identifizierten Behälter (10.2) zugeordnet werden, wobei das Verfahren folgende weiteren Schritte umfasst:
- Ermitteln der Anzahl der zyklisch hergestellten Kunststoffteile (2),
- Ermitteln der Dauer zwischen dem Prüfen und dem Abfüllen der Kunststoffteile (2),
- Zuordnen der Merkmale der abgefüllten Kunststoffteile (2) zu dem identifizierten Behälter (10) unter Berücksichtigung der Dauer zwischen dem Prüfen und dem Abfüllen der Kunststoffteile (2),
- Abfüllen einer vorgegebenen Anzahl von Kunststoffteilen (2) in den identifizierten Behälter (10.2) unter Berücksichtigung der Anzahl der zyklisch hergestellten Kunststoffteile (2) sowie der Dauer zwischen dem Prüfen und dem Abfüllen der Kunststoffteile (2).

2. Verfahren zum nacheinander erfolgenden Abfüllen von zyklisch mit einer Kunststoff-Verarbeitungsmaschine (1) hergestellten Kunststoffteilen (2) in mehrere Behälter (10) mit einer Abfülleinheit (4), wobei in jeden Behälter (10) mehrere Kunststoffteile (2) abgefüllt werden, **dadurch gekennzeichnet, dass** die hergestellten und aus der Kunststoff-Verarbeitungsmaschine (1) ausgeworfenen Kunststoffteile (2) während des Transports zu der Abfülleinheit (4) zumindest teilweise mittels eines Prüfsystems (5) auf mindestens ein Merkmal geprüft werden, jeder der mehreren Behälter (10) über ein eindeutiges Identifikationsmerkmal (11) vor dem Abfüllen identifiziert wird, das eindeutige Identifikationsmerkmal (11) an das Prüfsystem (5) übertragen und die Merkmale der abgefüllten Kunststoffteile (2) dem identifizierten Behälter (10.2) zugeordnet werden, wobei das Verfahren folgende weiteren Schritte umfasst:
- Ermitteln der Anzahl der zyklisch hergestellten Kunststoffteile (2),
- Ermitteln der Dauer zwischen dem Prüfen und dem Abfüllen der Kunststoffteile (2),
- Zuordnen der Merkmale der abgefüllten Kunststoffteile (2) zu dem identifizierten Behälter (10) unter Berücksichtigung der Dauer zwischen dem Prüfen und dem Abfüllen der Kunststoffteile (2),
- Ermitteln der Dauer zwischen dem Auswerfen und dem Abfüllen der Kunststoffteile (2),
- Abfüllen einer vorgegebenen Anzahl von Kunststoffteilen (2) in den identifizierten Behälter (10.2) unter Berücksichtigung der Anzahl der zyklisch hergestellten Kunststoffteile (2) sowie der Dauer zwischen dem Auswerfen und dem Abfüllen der Kunststoffteile (2).

3. Verfahren nach Anspruch 2, **dadurch gekennzeichnet, dass** bei lediglich teilweiser Prüfung der Kunststoffteile das Verfahren folgende weiteren Schritte umfasst:
- Ermittlung des Anteils der geprüften Kunststoffteile (2.1) an der zyklisch hergestellten Menge der Kunststoffteile (2) unter Berücksichtigung der Anzahl der prüfbaren Kunststoffteile, der Anzahl der zyklisch hergestellten Kunststoffteile (2) sowie der Dauer zwischen dem Auswerfen und dem Prüfen der zyklisch hergestellten Kunststoffteile (2) und
- Statistische Ermittlung der Merkmale der zyklisch hergestellten Kunststoffteile (2) auf der Basis der Merkmale des Anteils der geprüften Kunststoffteile (2.1) .

4. Verfahren nach einem der Ansprüche 1 bis 3, **dadurch gekennzeichnet, dass**
- beim Prüfen als fehlerhaft erkannte Kunststoffteile (2) automatisiert vor dem Abfüllen ausgesondert werden und
- das Abfüllen der vorgegebenen Anzahl der Kunststoffteile (2) in den identifizierten Behälter (10.2) unter Berücksichtigung der Anzahl der zyklisch hergestellten Kunststoffteile (2) vermindert um die ausgesonderten, fehlerhaften Kunststoffteile (2.4) erfolgt.

5. Verfahren nach einem der Ansprüche 1 bis 4, **dadurch gekennzeichnet, dass** eine Steuerung (14) der Abfülleinheit (4) nach dem Abfüllen der vorgegebenen Anzahl von Kunststoffteilen (2) ein Steuersignal erzeugt, um den nächsten der mehreren über ein eindeutiges Identifikationsmerkmal (11) identifizierten Behälter (10.1) abzufüllen.

6. Verfahren nach einem der Ansprüche 1 bis 5, **dadurch gekennzeichnet, dass** das Prüfsystem (5) ein Signal bereitstellt, wenn die dem identifizierten Behälter (10) zugeordneten Merkmale außerhalb eines Toleranzbereiches liegen.

7. Verfahren nach einem der Ansprüche 1 bis 6, **dadurch gekennzeichnet, dass** das Prüfsystem (5) abhängig von dem Ergebnis des Prüfens der Kunststoffteile (2.1) ein Signal für die Kunststoff-Verarbeitungsmaschine (1) bereitstellt.

8. Verfahren nach einem der Ansprüche 1 bis 7 **dadurch gekennzeichnet, dass** als Identifikationsmerkmal (11) an jedem Behälter ein eindeutiger, maschinenlesbarer Code angeordnet ist.

9. Verfahren nach einem der Ansprüche 2 bis 8, **dadurch gekennzeichnet, dass** das Prüfsystem (5) die Anzahl der zyklisch hergestellten Kunststoffteile (2) aus einem je Herstellungszyklus von der Kunststoff-Verarbeitungsmaschine (1) generierten Signal ermittelt.

10. Anordnung zur Durchführung des Verfahrens nach Anspruch 1, umfassend
- eine Kunststoff-Verarbeitungsmaschine (1), eingerichtet zum zyklischen Herstellen und Auswerfen von Kunststoffteilen (2),
- eine Abfülleinheit (4), eingerichtet zum nacheinander erfolgenden Abfüllen von zyklisch mit der Kunststoff-Verarbeitungsmaschine hergestellten Kunststoffteilen (2) in mehrere mit einem eindeutigen Identifikationsmerkmal (11) versehene Behälter (10), wobei in jeden Behälter (10) mehrere Kunststoffteile (2) abgefüllt werden,
- eine sich zwischen der Kunststoff-Verarbeitungsmaschine (1) und der Abfülleinheit (4) erstreckenden Transportvorrichtung (3) zum Transportieren der aus der Kunststoff-Verarbeitungsmaschine (1) ausgeworfenen Kunststoffteile (2) zu der Abfülleinheit (4),
- ein Prüfsystem (5) mit einer auf einen Prüfbereich (8) der Transportvorrichtung (3) ausgerichteten Aufnahmeeinrichtung (6) und einer Verarbeitungseinheit (7), wobei das Prüfsystem (5) derart konfiguriert ist, dass die den Prüfbereich (8) passierenden Kunststoffteile (2) während des Transports zu der Abfülleinheit (4) von der Aufnahmeeinrichtung (6) aufgenommen werden und die Verarbeitungseinheit (7) die Kunststoffteile (2) in den aufgenommen Bildern sämtlich auf mindestens ein Merkmal prüft,
- eine Leseeinrichtung (12), eingerichtet zum automatischen Lesen des eindeutigen Identifikationsmerkmals (11) jedes der mehreren Behälter (10),
- eine Kommunikationsschnittstelle (13.1) der Leseeinrichtung (12), die zur Übertragung des ausgelesenen eindeutigen Identifikationsmerkmals (11) des Behälters (10) an die Verarbeitungseinheit (7) des Prüfsystems (5) eingerichet ist,
- wobei das Prüfsystem (5) eingerichet ist, die Anzahl der zyklisch hergestellten Kunststoffteile (2) und die Dauer zwischen dem Prüfen und dem Abfüllen der Kunststoffteile (2) zu ermitteln, um eine vorgegebene Anzahl von Kunststoffteilen(2) in den identifizierten Behälter (10.2) unter Berücksichtigung der Anzahl der zyklisch hergestellten Kunststoffteile (2) sowie der Dauer zwischen dem Prüfen und dem Abfüllen der Kunststoffteile (2) abzufüllen und
- wobei die Verarbeitungseinheit (7) weiter derart eingerichtet ist, dass sie die Merkmale der abgefüllten Kunststoffteile (2) dem identifizierten Behälter (10) unter Berücksichtigung der Dauer zwischen dem Prüfen und dem Abfüllen der Kunststoffteile (2)zuordnet.

11. Anordnung zur Durchführung des Verfahrens nach Anspruch 2, umfassend
- eine Kunststoff-Verarbeitungsmaschine (1), eingerichtet zum zyklischen Herstellen und Auswerfen von Kunststoffteilen (2),
- eine Abfülleinheit (4), eingerichtet zum nacheinander erfolgenden Abfüllen von zyklisch mit der Kunststoff-Verarbeitungsmaschine hergestellten Kunststoffteilen (2) in mehrere mit einem eindeutigen Identifikationsmerkmal (11) versehene Behälter (10), wobei in jeden Behälter (10) mehrere Kunststoffteile (2) abgefüllt werden,
- eine sich zwischen der Kunststoff-Verarbeitungsmaschine (1) und der Abfülleinheit (4) erstreckenden Transportvorrichtung (3) zum Transportieren der aus der Kunststoff-Verarbeitungsmaschine (1) ausgeworfenen Kunststoffteile (2) zu der Abfülleinheit (4),
- ein Prüfsystem (5) mit einer auf einen Prüfbereich (8) der Transportvorrichtung (3) ausgerichteten Aufnahmeeinrichtung (6) und einer Verarbeitungseinheit (7), wobei das Prüfsystem (5) derart konfiguriert ist, dass die den Prüfbereich (8) passierenden Kunststoffteile (2) während des Transports zu der Abfülleinheit (4) von der Aufnahmeeinrichtung (6) aufgenommen werden und die Verarbeitungseinheit (7) die Kunststoffteile (2) in den aufgenommen Bildern zumindest teilweise auf mindestens ein Merkmal prüft,
- eine Leseeinrichtung (12), eingerichtet zum automatischen Lesen des eindeutigen Identifikationsmerkmals (11) jedes der mehreren Behälter (10),
- eine Kommunikationsschnittstelle (13.1) der Leseeinrichtung (12), die zur Übertragung des ausgelesenen eindeutigen Identifikationsmerkmals (11) des Behälters (10) an die Verarbeitungseinheit (7) des Prüfsystems (5) eingerichet ist,
- wobei das Prüfsystem (5) eingerichet ist, die Anzahl der zyklisch hergestellten Kunststoffteile (2), die Dauer zwischen dem Prüfen und dem Abfüllen der Kunststoffteile (2) und die Dauer zwischen dem Auswerfen und dem Abfüllen der Kunststoffteile (2) zu ermitteln, um eine vorgegebene Anzahl von Kunststoffteilen(2) in den identifizierten Behälter (10.2) unter Berücksichtigung der Anzahl der zyklisch hergestellten Kunststoffteile (2) sowie der Dauer zwischen dem Auswerfen und dem Abfüllen der Kunststoffteile (2) abzufüllen und
- wobei die Verarbeitungseinheit (7) weiter derart eingerichtet ist, dass sie die Merkmale der abgefüllten Kunststoffteile (2) dem identifizierten Behälter (10) unter Berücksichtigung der Dauer zwischen dem Prüfen und dem Abfüllen der Kunststoffteile (2)zuordnet.

## Claims

1. Method for the sequential filling of plastic parts (2) produced cyclically by a plastics processing machine (1) into a plurality of containers (10) with a filling unit (4), wherein a plurality of plastic parts (2) are filled into each container (10), **characterized in that** all the plastic parts (2) produced and ejected from the plastics processing machine (1) are inspected for at least one feature during transport to the filling unit (4) by means of a inspection system (5), each of the plurality of containers (10) is identified before filling via a unique identification feature (11), the unique identification feature (11) is transmitted to the inspection system (5) and the features of the filled plastic parts (2) are assigned to the identified container (10.2), wherein the method comprises the following further steps:
- determining the number of cyclically produced plastic parts (2),
- determining the duration between the inspection and filling of the plastic parts (2),
- assigning the features of the filled plastic parts (2) to the identified container (10), taking into account the duration between inspection and filling the plastic parts (2),
- filling a predetermined number of plastic parts (2) in the identified container (10.2), taking into account the number of cyclically produced plastic parts (2) and the duration between inspection and filling the plastic parts (2).

2. Method for the sequential filling of plastic parts (2) produced cyclically by a plastics processing machine (1) into a plurality of containers (10) with a filling unit (4), wherein a plurality of plastic parts (2) are filled into each container (10), **characterized in that** the plastic parts (2) produced and ejected from the plastics processing machine (1) are at least partially inspected for at least one feature during transport to the filling unit (4) by means of a inspection system (5), each of the plurality of containers (10) is identified before filling via a unique identification feature (11), the unique identification feature (11) is transmitted to the inspection system (5) and the features of the filled plastic parts (2) are assigned to the identified container (10.2), wherein the method comprises the following further steps:
- determining the number of cyclically produced plastic parts (2),
- determining the duration between inspection and filling the plastic parts (2),
- assigning the features of the filled plastic parts (2) to the identified container (10), taking into account the duration between inspection and filling the plastic parts (2),
- determining the duration between the ejection and the filling of the plastic parts (2),
- filling a predetermined number of plastic parts (2) into the identified container (10.2), taking into account the number of cyclically produced plastic parts (2) and the duration between ejection and filling of the plastic parts (2).

3. Method according to Claim 2, **characterized in that** if the plastic parts are only partially inspected, the method comprises the following further steps:
- determining the proportion of inspected plastic parts (2.1) in the cyclically produced quantity of plastic parts (2), taking into account the number of inspectable plastic parts, the number of cyclically produced plastic parts (2) and the duration between ejection and inspection of the cyclically produced plastic parts (2) and
- statistical determination of the features of the cyclically produced plastic parts (2) on the basis of the features of the proportion of the inspected plastic parts (2.1).

4. Method according to any one of claims 1 to 3, **characterized in that**
- plastic parts (2) identified as defective during testing are automatically separated out before filling and
- the predetermined number of plastic parts (2) is filled into the identified container (10.2), taking into account the number of cyclically produced plastic parts (2) reduced by the discarded defective plastic parts (2.4).

5. Method according to one of Claims 1 to 4, **characterized in that** a controller (14) of the filling unit (4) generates a control signal after the predetermined number of plastic parts (2) has been filled in order to fill the next of the plurality of containers (10.1) identified via a unique identification feature (11).

6. Method according to one of Claims 1 to 5, **characterized in that** the inspection system (5) provides a signal if the features associated with the identified container (10) are outside a tolerance range.

7. Method according to one of Claims 1 to 6, **characterized in that** the inspection system (5) provides a signal for the plastics processing machine (1) depending on the result of the inspection of the plastics parts (2.1) .

8. Method according to one of Claims 1 to 7, **characterized in that** a unique, machine-readable code is arranged on each container as an identification feature (11).

9. Method according to one of Claims 2 to 8, **characterized in that** the inspection system (5) determines the number of cyclically produced plastic parts (2) from a signal generated by the plastics processing machine (1) per production cycle.

10. Assembly for carrying out the method according to Claim 1, comprising
- a plastics processing machine (1), adapted for the cyclic production and ejection of plastic parts (2),
- a filling unit (4) adapted for sequentially filling plastic parts (2) produced cyclically by the plastics processing machine into a plurality of containers (10) provided with a unique identification feature (11), wherein a plurality of plastic parts (2) are filled into each container (10),
- a transport device (3) extending between the plastics processing machine (1) and the filling unit (4) for transporting the plastic parts (2) ejected from the plastics processing machine (1) to the filling unit (4),
- an inspection system (5) with a recording device (6) aligned onto an inspection area (8) of the transport device (3) and a processing unit (7), wherein the inspection system (5) is configured in such a manner that the plastic parts (2) passing through the inspection area (8) are recorded by the recording device (6) during transport to the filling unit (4) and the processing unit (7) inspects all the plastic parts (2) in the recorded images for at least one feature,
- a reading device (12), adapted for automatically reading the unique identification feature (11) of each of the plurality of containers (10),
- a communication interface (13.1) of the reading device (12), which is adapted to transmit the read-out unique identification feature (11) of the container (10) to the processing unit (7) of the inspection system (5),
- wherein the inspection system (5) is adapted to determine the number of cyclically produced plastic parts (2) and the duration between the inspection and filling of the plastic parts (2), in order to fill a predetermined number of plastic parts (2) into the identified container (10.2) taking account the number of cyclically produced plastic parts (2) and the duration between the inspection and filling of the plastic parts (2) and
- wherein the processing unit (7) is further adapted in such a manner that it assigns the features of the filled plastic parts (2) to the identified container (10) taking into account the duration between the inspection and filling of the plastic parts (2).

11. Assembly for carrying out the method according to Claim 2, comprising
- a plastics processing machine (1), adapted for the cyclic production and ejection of plastic parts (2),
- a filling unit (4) adapted for sequentially filling plastic parts (2) produced cyclically by the plastics processing machine into a plurality of containers (10) provided with a unique identification feature (11), wherein a plurality of plastic parts (2) are filled into each container (10),
- a transport device (3) extending between the plastics processing machine (1) and the filling unit (4) for transporting the plastic parts (2) ejected from the plastics processing machine (1) to the filling unit (4),
- an inspection system (5) with a recording device (6) aligned onto an inspection area (8) of the transport device (3) and a processing unit (7), wherein the inspection system (5) is configured in such a manner that the plastic parts (2) passing through the inspection area (8) are recorded by the recording device (6) during transport to the filling unit (4) and the processing unit (7) at least partially inspects the plastic parts (2) in the recorded images for at least one feature,
- a reading device (12), adapted for automatically reading the unique identification feature (11) of each of the plurality of containers (10),
- a communication interface (13.1) of the reading device (12), which is adapted to transmit the read-out unique identification feature (11) of the container (10) to the processing unit (7) of the inspection system (5),
- wherein the inspection system (5) is adapted to determine the number of cyclically produced plastic parts (2), the duration between the inspection and filling of the plastic parts (2) and the duration between the ejection and filling of the plastic parts (2) in order to fill a predetermined number of plastic parts (2) into the identified container (10.2) taking into account the number of cyclically produced plastic parts (2) and the duration between the ejection and filling of the plastic parts (2) and
- wherein the processing unit (7) is further adapted in such a manner that it assigns the features of the filled plastic parts (2) to the identified container (10) taking into account the duration between the inspection and filling of the plastic parts (2).

## Revendications

1. Procédé, destiné au chargement consécutif de pièces (2) en matière plastique fabriquées cycliquement avec une machine d'usinage (1) de matière plastique dans plusieurs conteneurs (10) à l'aide d'une unité de chargement (4), dans chaque conteneur (10) étant chargées plusieurs pièces (2) en matière plastique, **caractérisé en ce que** pendant le transport vers l'unité de chargement (4), toutes les pièces (2) en matière plastique fabriquées et éjectées de la machine d'usinage (1) de matière plastique sont contrôlées au moyen d'un système de contrôle (5) au niveau d'au moins une caractéristique, chacun des plusieurs conteneurs (10) est identifié avant le chargement par une caractéristique d'identification (11) unique, la caractéristique d'identification (11) unique est transmise au système de contrôle (5) et les caractéristiques des pièces (2) en matière plastique chargées sont associées au conteneur (10.2) identifié, le procédé comprenant les étapes additionnelles suivantes, consistant à :
- déterminer le nombre de pièces (2) en matière plastique fabriquées cycliquement,
- déterminer la durée entre le contrôle et le chargement des pièces (2) en matière plastique,
- associer les caractéristiques des pièces (2) en matière plastique chargées au conteneur (10) identifié, sous prise en compte de la durée entre le contrôle et le chargement des pièces (2) en matière plastique,
- charger un nombre prédéfini de pièces (2) en matière plastique dans le conteneur (10.2) identifié, sous prise en compte du nombre de pièces (2) en matière plastique fabriquées cycliquement, ainsi que de la durée entre le contrôle et le chargement des pièces (2) en matière plastique.

2. Procédé, destiné au chargement consécutif de pièces (2) en matière plastique fabriquées cycliquement avec une machine d'usinage (1) de matière plastique dans plusieurs conteneurs (10) à l'aide d'une unité de chargement (4), dans chaque conteneur (10) étant chargées plusieurs pièces (2) en matière plastique, **caractérisé en ce que** pendant le transport vers l'unité de chargement (4), toutes les pièces (2) en matière plastique fabriquées et éjectées de la machine d'usinage (1) de matière plastique sont contrôlées au moyen d'un système de contrôle (5) au niveau d'au moins une caractéristique, chacun des plusieurs conteneurs (10) est identifié avant le chargement par une caractéristique d'identification (11) unique, la caractéristique d'identification (11) unique est transmise au système de contrôle (5) et les caractéristiques des pièces (2) en matière plastique chargées sont associées au conteneur (10.2) identifié, le procédé comprenant les étapes additionnelles suivantes, consistant à :
- déterminer le nombre de pièces (2) en matière plastique fabriquées cycliquement,
- déterminer la durée entre le contrôle et le chargement des pièces (2) en matière plastique,
- associer les caractéristiques des pièces (2) en matière plastique chargées au conteneur (10) identifié, sous prise en compte de la durée entre le contrôle et le chargement des pièces (2) en matière plastique,
- déterminer la durée entre l'éjection et le chargement des pièces (2) en matière plastique,
- charger un nombre prédéfini de pièces (2) en matière plastique dans le conteneur (10.2) identifié, sous prise en compte du nombre de pièces (2) en matière plastique fabriquées cycliquement, ainsi que de la durée entre l'éjection et le chargement des pièces (2) en matière plastique.

3. Procédé selon la revendication 2, **caractérisé en ce que** dans le cas d'un contrôle seulement partiel des pièces en matière plastique, le procédé comprend les étapes additionnelles suivantes, consistant à :
- déterminer la proportion des pièces (2.1) en matière plastique vérifiées parmi la quantité de pièces (2) en matière plastique fabriquées cycliquement, sous prise en compte du nombre des pièces en matière plastique contrôlables, du nombre des pièces (2) en matière plastique fabriquées cycliquement, ainsi que de la durée entre l'éjection et le contrôle des pièces (2) en matière plastique fabriquées cycliquement, et
- déterminer statistiquement les caractéristiques des pièces (2) en matière plastique fabriquées cycliquement, sur la base des caractéristiques de la proportion des pièces (2.1) en matière plastique contrôlées.

4. Procédé selon l'une quelconque des revendications 1 à 3, **caractérisé en ce que**
- lors du contrôle, des pièces (2) en matière plastique reconnues comme étant défectueuses sont éliminées de manière automatisée avant le chargement et
- le chargement du nombre prédéfini des pièces (2) en matière plastique dans les conteneurs (10.2) identifiés s'effectue sous prise en compte du nombre des pièces (2) en matière plastique fabriquées cycliquement, minoré des pièces (2.4) en matière plastique défectueuses, éliminées.

5. Procédé selon l'une quelconque des revendications 1 à 4, **caractérisé en ce qu'**après le chargement du nombre prédéfini de pièces (2) en matière plastique, un système de commande (14) de l'unité de remplissage (4) génère un signal de commande, pour charger le suivant parmi les plusieurs conteneurs (10.1) identifiés par une caractéristique d'identification (11) unique.

6. Procédé selon l'une quelconque des revendications 1 à 5, **caractérisé en ce que** le système de contrôle (5) met à disposition un signal si les caractéristiques associées au conteneur (10) identifié se situent au-delà d'une plage de tolérance.

7. Procédé selon l'une quelconque des revendications 1 à 6, **caractérisé en ce qu'**en fonction du résultat du contrôle des pièces (2.1) en matière plastique, le système de contrôle (5) met à disposition un signal pour la machine d'usinage (1) de matière plastique.

8. Procédé selon l'une quelconque des revendications 1 à 7 **caractérisé en ce qu'**en tant que caractéristique d'identification (11), un code unique, lisible par machine est placé sur chaque conteneur.

9. Procédé selon l'une quelconque des revendications 2 à 8, **caractérisé en ce que** le système de contrôle (5) détermine le nombre des pièces (2) en matière plastique fabriquées cycliquement à partir d'un signal généré pour chaque cycle de fabrication par la machine d'usinage (1) de matière plastique.

10. Ensemble, destiné à réaliser le procédé selon la revendication 1, comprenant
- une machine d'usinage (1) de matière plastique, aménagée pour fabriquer cycliquement et pour éjecter des pièces (2) en matière plastique,
- une unité de remplissage (4), aménagée pour charger consécutivement des pièces (2) en matière plastique fabriquées cycliquement à l'aide de la machine d'usinage de matière plastique dans plusieurs conteneurs (10) munis d'une caractéristique d'identification (11) unique, dans chaque conteneur (10) étant chargées plusieurs pièces (2) en matière plastique,
- un dispositif de transport (3) s'étendant entre la machine d'usinage (1) de matière plastique et l'unité de remplissage (4), destiné à transporter vers l'unité de remplissage (4) les pièces (2) en matière plastique éjectées de la machine d'usinage (1) de matière plastique,
- un système de contrôle (5), pourvu d'un système d'enregistrement (6) orienté vers une zone de contrôle (8) du dispositif de transport (3) et d'une unité de traitement (7), le système de contrôle (5) étant configuré de telle sorte que les pièces (2) en matière plastique passant la zone de contrôle (8) pendant le transport vers l'unité de remplissage (4) soient enregistrées par le système d'enregistrement (6) et que l'unité de traitement (7) contrôle au niveau d'au moins une caractéristique toutes les pièces (2) en matière plastique dans les images enregistrées,
- un système de lecture (12), aménagé pour lire automatiquement la caractéristique d'identification (11) unique de chacun des plusieurs conteneurs (10),
- une interface de communication (13.1) du système de lecture (12), qui est aménagée pour transmettre à l'unité de traitement (7) du système de contrôle (5) la caractéristique d'identification (11) unique du conteneur (10) qui a été lue,
- le système de contrôle (5) étant aménagé pour déterminer le nombre des pièces (2) en matière plastique fabriquées cycliquement et la durée entre le contrôle et le chargement des pièces (2) en matière plastique, pour charger un nombre prédéfini de pièces (2) en matière plastique dans le conteneur (10.2) identifié, sous prise en compte du nombre des pièces (2) en matière plastique fabriquées cycliquement et de la durée entre le contrôle et le chargement des pièces (2) en matière plastique et
- l'unité de traitement (7) étant aménagée par ailleurs de sorte à associer les caractéristiques des pièces (2) en matière plastique chargées au conteneur (10) identifié, sous prise en compte de la durée entre le contrôle et le chargement des pièces (2) en matière plastique.

11. Ensemble, destiné à réaliser le procédé selon la revendication 2, comprenant
- une machine d'usinage (1) de matière plastique, aménagée pour fabriquer cycliquement et pour éjecter des pièces (2) en matière plastique,
- une unité de remplissage (4), aménagée pour charger consécutivement des pièces (2) en matière plastique fabriquées cycliquement à l'aide de la machine d'usinage de matière plastique dans plusieurs conteneurs (10) munis d'une caractéristique d'identification (11) unique, dans chaque conteneur (10) étant chargées plusieurs pièces (2) en matière plastique,
- un dispositif de transport (3) s'étendant entre la machine d'usinage (1) de matière plastique et l'unité de remplissage (4), destiné à transporter vers l'unité de remplissage (4) les pièces (2) en matière plastique éjectées de la machine d'usinage (1) de matière plastique,
- un système de contrôle (5) pourvu d'un système d'enregistrement (6) orienté vers une zone de contrôle (8) du dispositif de transport (3) et d'une unité de traitement (7), le système de contrôle (5) étant configuré de telle sorte que les pièces (2) en matière plastique passant la zone de contrôle (8) pendant le transport vers l'unité de remplissage (4) soient enregistrées par le système d'enregistrement (6) et que l'unité de traitement (7) contrôle au niveau d'au moins une caractéristique au moins partiellement les pièces (2) en matière plastique dans les images enregistrées,
- un système de lecture (12), aménagé pour lire automatiquement la caractéristique d'identification (11) unique de chacun des plusieurs conteneurs (10),
- une interface de communication (13.1) du système de lecture (12), qui est aménagée pour transmettre à l'unité de traitement (7) du système de contrôle (5) la caractéristique d'identification (11) unique du conteneur (10) qui a été lue,
- le système de contrôle (5) étant aménagé pour déterminer le nombre des pièces (2) en matière plastique fabriquées cycliquement, la durée entre le contrôle et le chargement des pièces (2) en matière plastique et la durée entre l'éjection et le chargement des pièces (2) en matière plastique, pour charger un nombre prédéfini de pièces (2) en matière plastique dans le conteneur (10.2) identifié, sous prise en compte du nombre des pièces (2) en matière plastique fabriquées cycliquement et de la durée entre l'éjection et le chargement des pièces (2) en matière plastique et
- l'unité de traitement (7) étant aménagée par ailleurs de sorte à associer les caractéristiques des pièces (2) en matière plastique chargées au conteneur (10) identifié, sous prise en compte de la durée entre le contrôle et le chargement des pièces (2) en matière plastique.
